# EUROPEAN PATENT SPECIFICATION

(11) **EP 4 010 160 B1**
(45) Date of publication and mention of the grant of the patent: **26.08.2026**
(21) Application number: 19940736.2
(22) Date of filing: 07.08.2019
(51) Int. Cl.: B29C 33/44, B29C 33/76, B29C 39/34, B29C 41/40, B29C 45/02, B29C 39/02, B29C 39/10, B29C 39/36, B29C 41/20, B29C 41/42, B29C 45/14, B29C 70/46, B29C 70/54

(54) **A MOULD TOOL ASSEMBLY**
FORMWERKZEUGANORDNUNG
ENSEMBLE D'OUTIL DE MOULE

(43) Date of publication of application: 15.06.2022
(73) Proprietor: SAAB AB, 581 88 Linköping (SE)
(72) Inventor: PETERSSON, Mikael, 582 24 Linköping (SE); ELIASSON, Per, 614 33 Söderköping (SE); DAVID SELVARAJ, Edward, Väderstad 590 21 (SE); WAARA, Jan, 582 75 Linköping (SE)
(74) Representative: Zacco Sweden AB
(86) International application number: PCT/SE2019/050728
(87) International publication number: WO 2021/025602

(56) References cited:
- EP-A1- 0 242 410
- EP-A1- 0 911 143
- WO-A1-2012/131457
- JP-A- H0 957 760
- KR-B1- 101 843 517
- KR-B1- 101 843 517
- US-A- 5 236 656
- US-A- 5 745 974
- US-A1- 2018 133 924
- US-B1- 6 203 745

## Description

### TECHNICAL FIELD

The present invention relates to a method of forming an article comprising a hollow structure, wherein the hollow structure is formed by a mould tool assembly extending along an imaginary axis. The present invention also relates to the mould tool assembly and a moulding tool apparatus comprising the mould tool assembly.

The present invention also may relate to a production line configured for automatic or semi-automatic manufacture of hollow aerial articles or any type of aerodynamically designed airfoil articles, wherein the production line comprises the moulding tool apparatus.

The present invention concerns the industry manufacturing hour-glass shaped hollow aerial articles, such as wings, stabilizers, control surfaces, etc.

The present invention especially may concern the industry manufacturing aerial vehicles or any industry producing integrated matrix composite articles or multi-spar hollow airfoil articles.

The present invention especially regards the forming of hour-glass shaped hollow composite parts, such as control surfaces, wherein hard and robust internal tools or mandrels are required.

The present invention may regard the forming of hour-glass shaped hollow aerial articles, such as control surfaces, wherein RTM process or prepreg lay-up application is used.

### BACKGROUND

When manufacturing articles with hour-glass shaped hollow structures, there is a challenge to remove the internal mould tool, inherently trapped by the geometrical shape of the hollow structure, from the interior of the aerial article. For example, hollow structures may require use of a plurality of complex internal mould tools that are time consuming in handling. Complex multi-piece rigid tooling of today utilizes and features separation of internal tool parts, which may constitute several block sections for forming complex geometries. The current tooling has a large number of tool parts and can only be removed one by one from the hollow structure after curing of the aerial article and not at the same time. Such plurality of tool parts implies high production cost, due to high machining cost of the tool parts and thus high manufacturing cost for each aerial article.

### SUMMARY OF THE INVENTION

There is an object to provide a cost-effective method of forming an aerial control surface comprising a hollow structure having an hour-glass shaped interior.

There is an object to provide a method of forming an aerial control surface comprising said hollow structure, which method increases the material quality of the finished article.

There is an object to provide a method of forming an aerial control surface comprising said hollow structure, which method implies that a hard and robust hollow structure forming surface of a mould tool assembly can be used.

There is an object to provide a method of forming an aerial control surface comprising said hollow structure, which method provides easy handling of tool parts.

There is an object to provide a method of forming an aerial control surface comprising said hollow structure, which method is time saving.

This or at least one of said objects has been achieved by a method of forming a hollow structure of an aerial control surface, which hollow structure is to be formed by a mould tool assembly extending along an imaginary axis, the mould tool assembly comprises a first and second rigid forming tool body configured to be releasable coupled to each other via a joint coupling; the first rigid forming tool body exhibits an increasing cross sectional area seen in a direction from the joint coupling toward a first free end of the first rigid forming tool body; the first rigid forming tool body exhibits a first rigid forming surface and the second rigid forming tool body exhibits a second rigid forming surface. The method comprises the steps of; providing the first and second rigid forming tool body; coupling the first and second rigid forming tool body to each other via the joint coupling; applying a resin matrix material on the first and second rigid forming surface and forming the resin matrix material over the first and second rigid forming surface; curing the resin matrix material; uncoupling the joint coupling; and separating the first rigid forming tool body from the second rigid forming tool body. Alternatively, the second rigid forming tool body exhibits an increasing cross sectional area seen in a direction from the joint coupling toward a second free end of the second rigid forming tool body. Alternatively, the first free end faces away from the second free end when the mould tool assembly is assembled.

In such way is achieved that the mould tool assembly can be uncoupled or spliced where the article exhibits its thinnest section, wherein the first and second rigid forming tool body each can be retracted from the respective open end of the article.

In such way there is achieved cost-effective production and time saving handling of tooling in the series production of aerial control surfaces with hour-glass shaped hollow shape or structure.

Thereby is achieved that the tooling simply can be split into two parts and separated in opposite directions away from the hour-glass shaped hollow shape or structure.

Alternatively, the step of applying a resin matrix material on the first and second rigid forming surface and forming the resin matrix material over the first and second rigid forming surface comprises application of a lay-up of prepreg material.

Alternatively, the prepreg material comprises pre-impregnated composite fibers embedded in e.g. a thermoset polymer matrix material, such as partially cured thermoset polymer.

Alternatively, the prepreg material is applied onto the first and second rigid forming surface by means of an automatic tape laying (ATL) apparatus.

Alternatively, the step of applying a resin matrix material on the first and second rigid forming surface is followed by a step of vacuum bagging.

Alternatively, the step of coupling the first and second rigid forming tool body to each other is followed by a step of locking the joint coupling by actuating a control member associated with a locking device of the joint coupling.

Alternatively, the control member comprises a handle or drive unit.

Alternatively, the step of coupling the first and second rigid forming tool body to each other is followed by a step of positioning the mould tool assembly in an outer line mould tool body providing a gap between the outer line mould tool body and the mould tool assembly.

Alternatively, the first and the second rigid forming surface constitute a rigid forming surface of the mould tool assembly.

Alternatively, the gap is formed between the rigid forming surface of the mould tool assembly and a rigid outer line forming surface of the outer line mould tool body, when the mould tool assembly has been positioned in the outer line mould tool body.

Alternatively, the outer line mould tool body and/or first rigid forming tool body and/or second rigid forming tool body being made of steel.

Alternatively, the outer line mould tool body and/or first rigid forming tool body and/or second rigid forming tool body each being made as one-piece part.

Alternatively, the outer line mould tool body constitutes of at least two parts configured to be coupled together around the mould tool assembly.

Alternatively, the step of applying a resin matrix material on the first and second rigid forming surface is performed by resin transfer into the gap.

Alternatively, the resin transfer into the gap is made via at least one resin transfer channel arranged in the joint coupling.

Alternatively, the method further comprises a step of removing the first and second rigid forming tool body from the hour-glass shaped hollow structure after the step of separating the first rigid forming tool body from the second rigid forming tool body.

Alternatively, the step of removing the first and second rigid forming tool body from the hour-glass shaped hollow structure is performed simultaneously or by firstly removing the first rigid forming tool body from the hollow structure.

There is an object to provide a mould tool assembly configured to form a hollow structure of an article having an hour-glass shaped interior (hour-glass shaped hollow structure), which mould tool assembly is easy and cost-effective to use, wherein the geometric tolerance of the hollow structure of the finished article is acceptable.

There is an object to reduce the number of tool parts in comparison with prior art.

There is an object to provide a mould tool assembly having a rigid hour-glass shaped hollow structure forming surface configured for forming said hollow structure of an article.

There is an object to provide a moulding tool assembly that can be used cost-effective in a production line configured to produce an article comprising said hour-glass shaped hollow structure. There is an object to provide a mould tool assembly that can be used cost-effective in a production line, configured to produce aerial control surfaces having hour-glass shaped hollow structures.

This or at least one of said objects has been achieved by a mould tool assembly configured to form an hour-glass shaped hollow structure, the mould tool assembly extending along an imaginary axis and comprises; a first and second rigid forming tool body configured to be releasable coupled to each other via a joint coupling; the first rigid forming tool exhibits a first rigid forming surface and the second rigid forming tool exhibits a second rigid forming surface; wherein the first rigid forming tool body exhibits an increasing cross sectional area seen in a direction from the joint coupling toward a first free end of the first rigid forming tool body.

Alternatively, the second rigid forming tool body exhibits an increasing cross sectional area seen in a direction from the joint coupling toward a second free end of the second rigid forming tool body.

Alternatively, the first rigid forming tool body exhibits a similar and/or non-varying cross sectional geometry normal to the imaginary axis and the cross sectional area of the first rigid forming tool body increases seen in a direction from the joint coupling toward the first free end.

Alternatively, the second rigid forming tool body exhibits a similar and/or non-varying cross sectional geometry normal to the imaginary axis and the cross sectional area of the second rigid forming tool body increases seen in a direction from the joint coupling toward the second free end.

Alternatively, the first rigid forming tool body exhibits largely similar or non-varying cross sectional geometry in each plane normal to the imaginary axis and exhibits an increasing cross sectional area seen in a direction from the joint coupling toward a first free end of the first rigid forming tool body.

Alternatively, the second rigid forming tool body exhibits largely similar or non-varying cross sectional geometry in each plane normal to the imaginary axis and exhibits an increasing cross sectional area seen in a direction from the joint coupling toward a second free end of the second rigid forming tool body.

Alternatively, the mould tool assembly, when the first and second rigid forming tool body being coupled to each other, exhibits a non-varying cross sectional geometry and/or increasing cross sectional area seen in a direction from the joint coupling toward the first free end of the first rigid forming tool body and toward the second free end of the second rigid forming tool body.

Alternatively, the first rigid forming tool body exhibits increasing thickness and/or chord measure seen in a direction from the joint coupling toward the first free end of the first rigid forming tool body.

Alternatively, the second rigid forming tool body exhibits increasing thickness and/or chord measure seen in a direction from the joint coupling toward the second free end of the second rigid forming tool body.

Alternatively, the first and second rigid forming surface being configured for forming an interior surface the hour-glass shaped hollow structure.

Alternatively, the female tooling body comprises an outer line forming tool configured with a rigid interior forming surface adapted to form an outer surface of the article.

Alternatively, the outer surface of the article also is hour-glass shaped and may be formed with an extension co-axially with the extension of the interior surface.

The article is an aerial control surface, formed with an hour-glass shaped outer surface and an hour-glass shaped inner surface.

Alternatively, the aerial control surface exhibits a mid-section comprising an intermediate profile portion positioned between a first and a second tip, which intermediate profile portion exhibits a thickness that is thinner than the thickness of the respective profile of the respective first and second tip of the aerial article.

Alternatively, the aerial control surface exhibits a profile having thinnest thickness in a mid-section of the aerial article and increasing toward a first tip to a second tip of the aerial article.

Alternatively, the aerial control surface has a narrowing chord measure toward a mid-section of the aerial article and increasing chord measure toward a first tip and a second tip of the aerial article.

Alternatively, the aerial control surface is a flaperon configured to be hingedly arranged adjacent the trailing edge of a wing of an aircraft, preferably positioned between an outboard flap and an inboard flap of the aircraft.

Alternatively, during use of the mould tool assembly for forming the aerial control surface, wherein the first and second rigid forming tool body being coupled to each other constituting a hour-glass shaped mould tool assembly, a rigid forming surface section surrounding the joint coupling forms a cross-sectional area of the mould tool assembly that increases toward the first respective the second free end.

Alternatively, during use of the mould tool assembly for forming the aerial control surface, wherein the first and second rigid forming tool body being coupled to each other, wherein the first coupling end of the first rigid forming tool body adjoins the second coupling end of the second rigid forming tool body in a joint plane positioned at the mid-section of the aerial article.

Alternatively, the position of the joint coupling (i.e. the first and second coupling ends) corresponds with the mid-section of the aerial article (most narrow section) during forming of the aerial article.

Alternatively, the joint plane having an extension essentially normal to the imaginary axis.

Alternatively, the joint coupling comprises a first coupling end of the first rigid forming tool body and comprises a second coupling end of the second rigid forming tool body.

Alternatively, when the first and second rigid forming tool body being coupled to each other, the first coupling end abuts the second coupling end.

Alternatively, first rigid forming tool body exhibits substantially similar or non-varying cross sectional geometry seen in a direction from a first coupling end and toward a first free end of the first rigid forming tool body.

Alternatively, second rigid forming tool body exhibits substantially similar or non-varying cross sectional geometry seen in a direction from a second coupling end toward a second free end of the second rigid forming tool body.

Alternatively, the imaginary axis may be a linear or curvilinear axis.

Alternatively, the mould tool assembly comprises a first and second rigid forming tool body configured to be releasable coupled to each other via a joint coupling comprising a guiding member.

Alternatively, the joint coupling comprises a clamp arrangement configured to clamp the first rigid forming tool body and the second rigid forming tool body to each other, wherein a first clamping end (i.e. the first free end) of the first rigid forming tool body is pressed toward a second clamping end (i.e. the second free end) of the second rigid forming tool body by means of the clamp arrangement.

Alternatively, the joint coupling comprises a locking device of a guiding member configured to guide the first and the second rigid forming tool body into contact with each other such that the first free end and the second free end may adjoin each other) and alternatively lock the first and the second rigid forming tool body to each other by means of the locking device.

Alternatively, the locking device is coupled to an actuator configured to lock and unlock the first and second rigid forming tool body to and from each other.

Alternatively, the rigid forming surface section surrounding the joint coupling, when the first and second rigid forming tool body being coupled to each other, forms a cross sectional area that is smaller than any other cross sectional area taken normal to the imaginary line of the mould tool assembly.

Alternatively, the assembled mould tool assembly forms a waist in a mid-section that corresponds with the "waist" of the hour-glass shaped hollow aerial article.

Alternatively, the respective first and second rigid forming tool body extends along the imaginary axis, when the first and second rigid forming tool body being coupled to each other.

Alternatively, the joint coupling comprises a first coupling surface of the first rigid forming tool body and a second coupling surface of the second rigid forming tool body.

Alternatively, the joint coupling comprises a locking device associated with a control member configured to lock the joint coupling.

Alternatively, the control member is coupled to an electronic control circuit comprising a processor configured to operate the locking device.

Alternatively, the electronic control circuit further being configured to operate the assembly of the mould tool assembly and coupling of the first and second rigid forming tool body to each other and/or operate the application of a resin matrix material on the first and second rigid forming surface by means of a robot apparatus and/or operate the forming the resin matrix material over the first and second rigid forming surface and/or operate the curing of the aerial article and/or remove the mould tool assembly.

Alternatively, the respective first and second rigid forming tool body each comprises a through bore extending along the imaginary axis, which through bore is configured to encompass an elongated guidance device (e.g. an elongated core) for guiding the first and second rigid forming tool body in alignment with each other.

Alternatively, the elongated guidance device is configured to guide the first and second rigid forming tool body in proper alignment with each other, wherein a first coupling end of the first rigid forming tool abuts a second coupling end of the second rigid forming tool.

Alternatively, the elongated guidance device comprises the at least one resin transfer channel.

Alternatively, the elongated guidance device comprises a heating element configured for providing heat for curing the resin applied onto the forming surface.

In such way is achieved a simplified tooling in that the elongated guidance device is configured for providing alignment of the first and second rigid forming tool body at the same time as the guiding member is used for heating the resin material to be cured.

Alternatively, the at least one resin transfer channel exhibits a first discharge open toward a first resin transfer branch channel configured to distribute resin matrix material into the gap and exhibits an inflow configured to be coupled to resin supply.

Alternatively, the first resin transfer branch channel is positioned in the first rigid forming tool and comprises a first inlet opening and a first outlet opening.

Alternatively, the first inlet opening of the first resin transfer branch channel of the first rigid forming tool is configured to connect the first discharge of the at least one resin transfer channel of the elongated guidance core for resin transfer from the resin supply, when the first and second rigid forming tool body being coupled to each other.

In such way is achieved a simplified tooling in that the elongated guidance device is configured for providing alignment of the first and second rigid forming tool body at the same time as the guiding member is used for heating the resin material to be cured and/or is used also for resin transfer from a resin supply to the gap.

Alternatively, the first inlet opening of the first resin transfer branch channel of the first rigid forming tool is configured to be coupled to the first discharge of the elongated guidance core, when the first and second rigid forming tool body being positioned on the elongated guidance core and the first and the second coupling end being coupled to each other.

Alternatively, the first outlet opening of the first resin transfer branch channel is configured to be coupled to the gap.

Alternatively, the at least one resin transfer channel exhibits a second discharge open toward a second resin transfer branch channel configured to distribute resin matrix material into the gap.

Alternatively, the second resin transfer branch channel is positioned in the second rigid forming tool and comprises a second inlet opening and a second outlet opening.

Alternatively, the second inlet opening of the second resin transfer branch channel of the second rigid forming tool is configured to connect the second discharge of the at least one resin transfer channel of the elongated guidance core for resin transfer from the resin supply, when the first and second rigid forming tool body being coupled to each other.

Alternatively, the second inlet opening of the second resin transfer branch channel of the second rigid forming tool is configured to be coupled to the second discharge of the elongated guidance core, when the first and second rigid forming tool body being positioned on the elongated guidance core and the first and the second coupling end being coupled to each other.

Alternatively, the second outlet opening of the second resin transfer branch channel of the second rigid forming tool is configured to be coupled to the gap.

This or at least one of said objects has been achieved by a moulding tool apparatus configured to form a hollow structure of an aerial control surface extending along a central line, the moulding tool apparatus comprises the claimed mould tool assembly, and an outer line mould tool body configured to form an outer surface of the aerial article.

Thereby is achieved that hard and robust tooling can be used by providing a hard mould tool assembly that can be separated at the most narrow or thinnest section of hour-glass shaped mould tool assembly, wherein the method implies that a hard and robust hollow structure forming surface of a mould tool assembly can be used.

This or at least one of said objects has been achieved by a production line configured for automatic or semi-automatic manufacture of an article ccomprising a hollow structure, the production line comprises the above-mentioned moulding tool apparatus, wherein the production line is configured to manage the claimed method steps.

Alternatively, the production line comprises a control unit coupled to the moulding tool apparatus, wherein the control unit is configured to control the moulding tool apparatus to perform the claimed method steps.

This or at least one of said objects has been achieved by a data medium storing program configured for, in the above-mentioned production line, manufacture of an article comprising a hollow structure, wherein said data medium storing program comprises a program code stored on a medium, which is readable on a computer, for causing the control unit to perform the method steps of; providing the first and second rigid forming tool; coupling the first and second rigid forming tool to each other by means of the joint coupling; applying a resin matrix material on the first and second rigid forming surface and forming the resin matrix material; curing the resin matrix material; uncoupling the joint coupling; and removing the first rigid forming tool from the hollow structure. This or at least one of said objects has been achieved by a data medium storing program product comprising a program code stored on a medium, which is readable on a computer, for performing the claimed method steps, when the above-mentioned data medium storing program is run on the computer.

### BRIEF DESCRIPTION OF THE DRAWINGS

The present invention will now be described by way of examples with references to the accompanying schematic drawings, of which:
Fig. 1 illustrates an aircraft in a perspective view comprising a control surface in the form of a flaperon manufactured by means of a mould tool assembly;
Fig. 2 illustrates in a view from behind the flaperon in Fig. 1 showing a thinner mid-section of the hour-glass shaped flaperon;
Fig. 3a illustrates a control surface in a view from above;
Fig, 3b illustrates the control surface shown in Fig. 3a in a view from behind;
Fig. 3c illustrates the cross-sectional geometry of the control surface shown in Fig. 3a;
Figs. 4a-4c illustrate a mould tool assembly according to a first example;
Fig. 5 illustrates a mould tool assembly according to a second example;
Fig. 6a-6b illustrate a mould tool assembly according to a third example;
Fig. 7 illustrates an exemplary production line configured for forming a hollow structure of an article having an hour-glass shaped hollow interior by means of a moulding tool apparatus according to one aspect;
Fig. 8 illustrates a mould tool assembly according to a fourth example;
Figs. 9a-9b illustrate a mould tool assembly according to a fifth example;
Fig. 9c illustrates a mould tool assembly according to a sixth example;
Figs. 10-11 illustrate flowcharts showing exemplary methods of forming a hollow structure of an article having an hour-glass shaped hollow interior; and
Fig. 12 illustrates a processor circuitry configured to control the assembly of the mould tool assembly and the moulding and manufacture of an aerial article according to one aspect.

### DETAILED DESCRIPTION

Hereinafter, embodiments of the present invention will be described in detail with reference to the accompanying drawings, wherein for the sake of clarity and understanding of the invention some details of no importance may be deleted from the drawings.

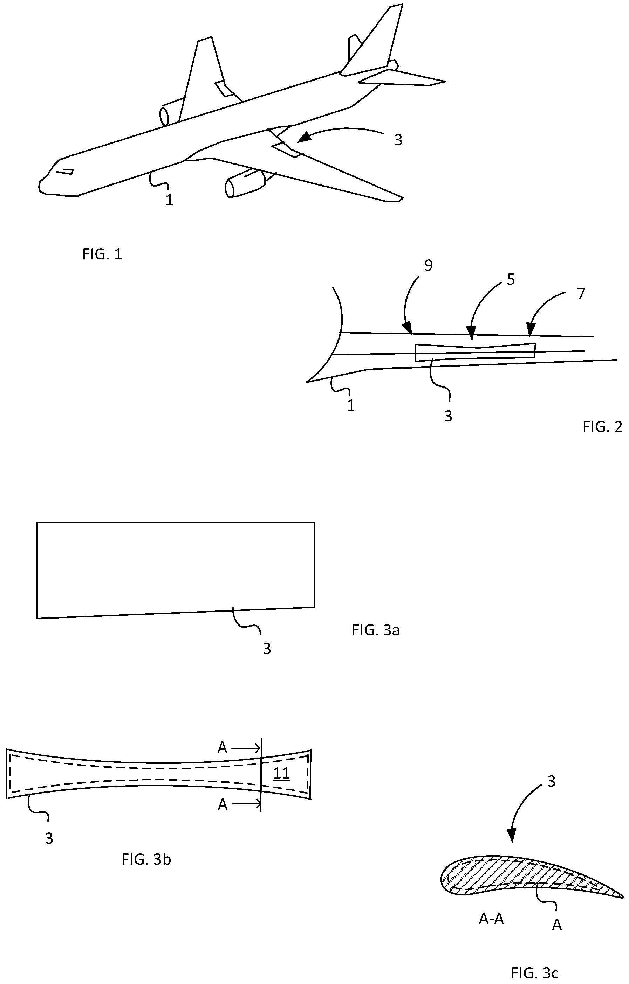

Fig. 1 illustrates an aircraft 1 in a perspective view comprising a control surface 3 in the form of a flaperon manufactured by means of a mould tool assembly according to one aspect. A flaperon is a type of control surface 3 that combines aspects of both flaps and ailerons. The flaperons can be lowered together to function similarly to flaps. To adapt the flaperon aerodynamics to a broken-line trailing edge of the aircraft wing and to the geometry of the outboard flap and inboard flap, a top surface and a bottom surface of the flaperon will bulge inwardly in the midsection 5, as seen in Fig. 2.

The midsection 5 is positioned between an outboard end cap section 7 and an inboard end cap section 9 of the control surface 3. The mid-section 5 exhibits a thinner profile than the profiles of the outboard end cap section and the inboard end cap section.

Fig. 3a illustrates a control surface 3 of an aerial vehicle (not shown) in a view from above. The general shape of the control surface 3 is rectangular or trapezoidal shaped when seen from above. Fig. 3b illustrates the control surface 3 shown in Fig. 3a in a view from behind and illustrates that the control surface 3 exhibits an hour-glass shaped hollow interior. Fig. 3c illustrates the cross-sectional geometry in section A-A of the control surface 3.

The cross-sectional geometry may be the same over the length (spanwise) but the cross-sectional area A measures vary along the length (spanwise) having the smallest cross-sectional area measure at the mid-section 5.

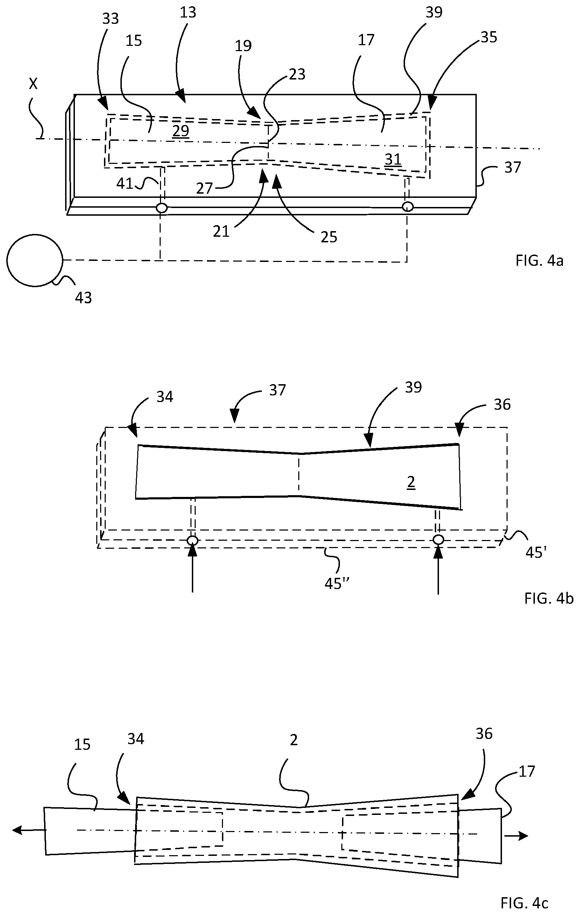

Figs. 4a-4c illustrate a mould tool assembly 13 according to a first example. The mould tool assembly 13 in Fig. 4a is configured to form an hour-glass shaped hollow structure. The mould tool assembly 13 extends along an imaginary axis X. The mould tool assembly 13 comprises a first and second rigid forming tool 15, 17 configured to be releasable coupled to each other via a joint coupling 19. The joint coupling 19 comprises a first coupling end 21 of the first rigid forming tool 15 having a first coupling surface 23 and comprises a second coupling end 25 of the second rigid forming tool 17 having a second coupling surface 27.

The joint coupling 19 further comprises a lock (not shown) that holds the first and second rigid forming tool 15, 17 together so that the first coupling end 21 and the second coupling end 25 will adjoin each other and so that a first rigid forming surface 29 of the first rigid forming tool 15 and a second rigid forming surface 31 of the second rigid forming tool 17 are aligned for providing a smooth transition between the first and second rigid forming tool 15, 17 over the joint coupling 19. The first rigid forming tool 15 exhibits an increasing cross sectional area seen in a direction from the joint coupling 19 toward a first free end 33 of the first rigid forming tool 15. The second rigid forming tool 17 exhibits an increasing cross sectional area seen in a direction from the joint coupling 19 toward a second free end 35 of the second rigid forming tool 17. The first and second rigid forming tool 15, 17 is positioned in an outer line mould tool 37 providing a gap 39 between the outer line mould tool 37 and the mould tool assembly 13. Before positioning the first and second rigid forming tool 15, 17 in the outer line mould tool 37, micro fibers and/or nano fibers are applied onto the first and second rigid forming surface 29, 31. Resin transfer lines 41 formed in the outer line mould tool 37 are provided for transfer of resin into the gap 39 from a resin supply 43. Fig. 4b shows resin transfer into the gap 39 for forming an aerial article 2 having an hour-glass shaped hollow structure and the aerial article 2 having a first and second open end 34, 36.

Fig. 4c shows retraction of the first and second rigid forming tool 15, 17 from the cured aerial article 2 after dividing upper and lower tool parts 45', 45" of the outer line mould tool 37 and thus removing the outer line mould tool 37 from the mould tool assembly 13 with the cured aerial article 2.

Alternatively, a lock (not shown) of the joint coupling 19 is released and subsequently the first and second rigid forming tool 15, 17 being separated (spliced) from each other and being drawn out from the interior of the aerial article 2 in opposite direction and in direction from each other.

The first rigid forming tool 15 is drawn out from the interior of the aerial article 2 via the first open end 34. The second rigid forming tool 17 is drawn out from the interior of the aerial article 2 via the second open end 36.

The first coupling end 21 and the second coupling end 25 are thus separated from each other. The cross sectional area of the first coupling end 21 of the first rigid forming tool 15 exhibits the thinnest section seen in a direction along the imaginary axis X. The cross sectional area of the second coupling end 25 of the second rigid forming tool 17 exhibits the thinnest section seen in a direction along the imaginary axis X.

The cross sectional area of the first coupling end 21 corresponds with the cross sectional area of the second coupling end 25.

In such way is achieved that the mould tool assembly 13 easily and cost-effective can be uncoupled and spliced, wherein the first and second rigid forming tool 15, 17 can be retracted from the respective first and second open end 34, 36 of the aerial article along the central line CL of the aerial article 2.

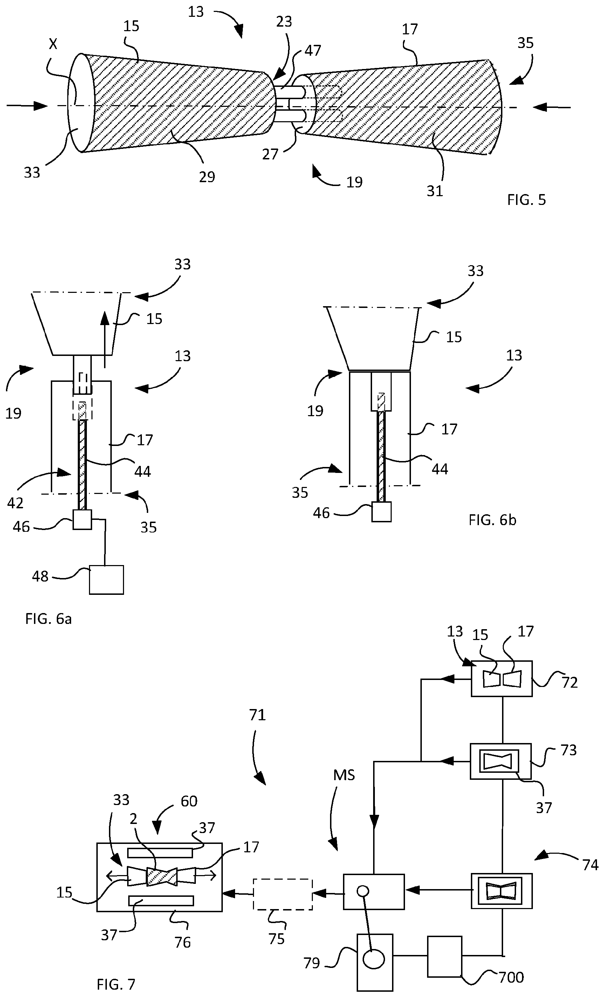

Fig. 5 illustrates a mould tool assembly 13 according to a second example. The mould tool assembly 13 comprises a first and second rigid forming tool 15, 17 configured to be releasable coupled to each other via a joint coupling 19. The joint coupling 19 comprises a first coupling surface 23 and comprises a second coupling surface 27. The joint coupling 19 further comprises at least one guide pin 47 configured to guide and lock the first and second rigid forming tool 15, 17 to each other so that a first rigid forming surface 29 respective a second rigid forming surface 31 of the respective first and second rigid forming tool 15, 17 are aligned for providing a smooth transition between the first and second rigid forming tool 15, 17 when being coupled. The first rigid forming tool 15 exhibits an increasing cross sectional area seen in a direction from the joint coupling 19 toward a first free end 33 of the first rigid forming tool 15. The second rigid forming tool 17 exhibits an increasing cross sectional area seen in a direction from the joint coupling 19 toward a second free end 35 of the second rigid forming tool 17.

Fig. 6a-6b illustrate a mould tool assembly 13 according to a third example. The mould tool assembly 13 comprises a first and second rigid forming tool 15, 17 configured to be releasable coupled to each other via a joint coupling 19. The first rigid forming tool 15 exhibits an increasing cross sectional area seen in a direction from the joint coupling 19 toward a first free end 33 of the first rigid forming tool 15. The second rigid forming tool body 17 exhibits same cross sectional area seen in a direction from the joint coupling 19 toward a second free end 35 of the second rigid forming tool body 17.

A lock 42 of the joint coupling 19 is configured to lock the first and second rigid forming tool 15, 17 to each other. A rotary locking spindle 44 of the first rigid forming tool 15 comprises a thread that is configured to mate a corresponding thread of a bore hole of the second rigid forming tool 17. The rotary locking spindle 44 is coupled to an electrical motor 46. A control circuitry 48 is coupled to the electrical motor 46 and is configured to control the locking and unlocking of the lock 42 by predetermined rate and extent of rotation of the electrical motor 46. In Fig. 6a is shown unlocking and separating of the mould tool assembly 13.

In Fig. 6b is shown that the first and second rigid forming tool 15, 17 being locked to each other by means of the lock 42. The mould tool assembly 13 may be use in automatic or semi-automatic manufacture of an aerial article 2 comprising an hour-glass shaped hollow structure.

Fig. 7 illustrates an exemplary production line 71 configured for forming a hollow structure of an aerial article 2, having an hour-glass shaped hollow interior, by means of a moulding tool apparatus 60 according to one aspect. The moulding tool apparatus 60 further comprises an outer line forming tool 37 configured to form an outer surface of the aerial article 2.

A processor circuitry 700 is configured to control the arrangement and assembly of the moulding tool apparatus 60 and the moulding and manufacture of the aerial article 2 with an hour-glass shaped hollow interior. The processor circuitry 900 is fed with data from a mould tooling model determined by a designer or by generative design program designing the moulding tool apparatus 60 from given parameters.

The production line 71 comprises a first apparatus 72 configured to provide a first and second rigid forming tool 15, 17. The production line 71 further comprises a second apparatus 73 configured to provide an outer line mould tool 37.

The production line 71 further comprises a third apparatus 74 configured to couple the first rigid forming tool 15 to the second rigid forming tool 17 by means of a joint coupling (not shown). The third apparatus 74 is further configured to apply reinforcement structure (e.g. micro fibers and/or nano fibers) onto the rigid forming surface (not shown) of the first and second rigid forming tool 15, 17. The third apparatus 74 comprises a robot apparatus 79 configured to position the respective first and second rigid forming tool 15, 17, having previously applied reinforcement structure, into the outer line mould tool 37 for forming a gap (not shown) to be filled with resin.

Alternatively, the third apparatus 74 may comprise a robot apparatus 79 configured to position the respective first and second rigid forming tool 15, 17 (comprising applied ATL lay-up of prepreg material onto the rigid forming surface of the first and second rigid forming tool 15, 17) into an outer line mould tool or configured to position a vacuum bag around the applied prepreg material.

The robot apparatus 79 may thus be a part of a moulding station MS adapted to manage the positioning the mould body assembly 13 into the outer line forming tool 37 and applying resin into the gap or position a mould tool assembly with prepreg lay-up in a vacuum bag.

The production line 91 further comprises a fourth apparatus 75 configured to manage a curing process for curing the resin material. A fifth apparatus 76 of the production line 71 is configured to remove the outer line mould tool 37 or vacuum bag from the aerial article 2 surrounding the first and second rigid forming tool 15, 17.

The fifth apparatus 76 uncouples the joint coupling (releasing the first and second rigid forming tool 15, 17 from each other) and since the first rigid forming tool 15 exhibits an increasing cross sectional area seen in a direction from the joint coupling 19 toward a first free end 33 of the first rigid forming tool 15, it is possibly to remove the first rigid forming tool 15 from the interior of the aerial article 2. The second rigid forming tool 17 exhibits an increasing cross sectional area seen in a direction from the joint coupling 19 toward a second free end 35 of the second rigid forming tool 17. The robot apparatus 79 may be used to remove (and/or separate) the first and the second rigid forming tool 15, 17 from the hour-glass shaped hollow structure of the aerial article 2.

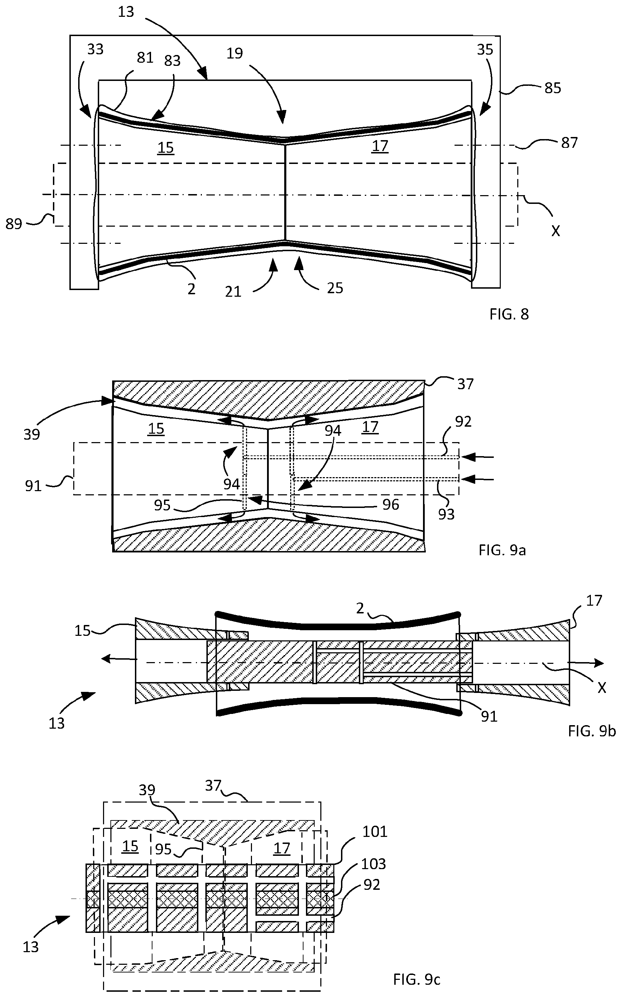

Fig. 8 illustrates a mould tool assembly 13 according to a fourth example. The mould tool assembly 13 is configured to form an hour-shaped hollow structure of an aerial article 2 and the mould tool assembly 13 extends along an imaginary axis X. The mould tool assembly 13 comprises a first and second rigid forming tool 15, 17 configured to be releasable coupled to each other via a joint coupling 19. The first rigid forming tool 15 exhibits an increasing cross sectional area seen in a direction from the joint coupling 19 toward a first free end 33 of the first rigid forming tool 15. The second rigid forming tool 17 exhibits an increasing cross sectional area seen in a direction from the joint coupling 19 toward a second free end 35 of the second rigid forming tool 17. The respective tool is made of steel or any other hard material for providing a rigid forming surface of the mould tool assembly 13. The rigid forming surface being configured for forming an hour-shaped interior surface of the hollow structure.

Alternatively, the first and second rigid forming tool 15, 17 having a similar and/or non-varying cross sectional geometry in plane normal to the imaginary axis X.

Alternatively, an outer line forming tool in the form of a vacuum bag 81 is arranged over the resin matrix material 83 applied onto the rigid forming surface.

Alternatively, the first and second rigid forming tool 15, 17 being releasable coupled to each other via the first and second coupling ends 21, 23 of the rigid forming tools 15, 17, and which are held together by means of a yoke clamp 85 of the joint coupling 19.

The yoke clamp 85 of the joint coupling 19 comprises locking screws 87 that hold the first and second rigid forming tools 15, 17 in mutual position relatively each other. A guiding core spindle 89 is arranged in through holes of the respective first and second rigid forming tool 15, 17 for guiding the first and second rigid forming tools 15, 17 in proper alignment with each other so that the respective rigid forming surface is in line and providing smooth transition. The locking screws 87 may be manually drawn but also may be controlled by a control circuit (not shown) configured to draw tight or release the locking screws 87 by means of a driver (not shown).

Figs. 9a-9b illustrate a mould tool assembly 13 according to a fifth example. A central core 91 comprising a first and a second resin transfer channel 92, 93 is inserted through a respective first and second through hole of the respective first and second rigid forming tool 15, 17 and aligns the respective first and second rigid forming tool 15, 17. The respective first and a second resin transfer channel 92, 93 each has a discharge 94 open toward a respective resin transfer branch channel 95 configured to distribute resin matrix material into a gap 39 formed between the respective rigid forming tool 15, 17 and an outer line mould tool 37 as shown in Fig. 9a. The respective resin transfer branch channel 95 exhibits an inflow 96 configured to be coupled to a resin supply (not shown). The respective resin transfer branch channel 95 is configured to distribute resin matrix material into the gap 39 via a respective resin transfer channel 92, 93 of each first and second rigid forming tool 15, 17, when the first and second rigid forming tool 15, 17 being coupled to each other and the respective resin transfer branch channel 95 is in line with the discharge 94 of the respective resin transfer channel when the central core 91 is correctly inserted and aligning the first and second rigid forming tool 15, 17.

Alternatively, the joint coupling 19 comprises an elongated guidance core (e.g. the central core 91) in turn comprising the resin transfer channels 92, 93.

Fig. 9b shows the demounting of the mould tool assembly 13 after curing of the aerial article 2. The respective first and second rigid forming tool 15, 17 being separated from each other and removed in opposite direction from each other along the central axis X thereby permitting removal of the aerial article 2 from the inherently trapping geometrical hour-glass shape. The central core 91 is released from the first and second rigid forming tool 15, 17 by sliding them in opposite directions and along the central core 91 after releasing a clamping arrangement.

Fig. 9c illustrates a mould tool assembly 13 according to a sixth example. A guiding core 101, configured to couple and align a first and second rigid forming tool 15, 17, comprises a plurality resin transfer channels 92. The guiding core 101 is configured to be is inserted into a respective first and second through hole of the respective first and second rigid forming tool 15, 17. The plurality of resin transfer channels 92 are provided for distributing resin into a gap 39 formed between the respective rigid forming tool 15, 17 and an outer line mould tool 37. The resin is fed into the gap 39 via transfer channels 95 of the respective first and second rigid forming tool 15, 17. A heating element 103 is arranged in the guiding core 101 for providing heat for curing the resin in the gap 39.

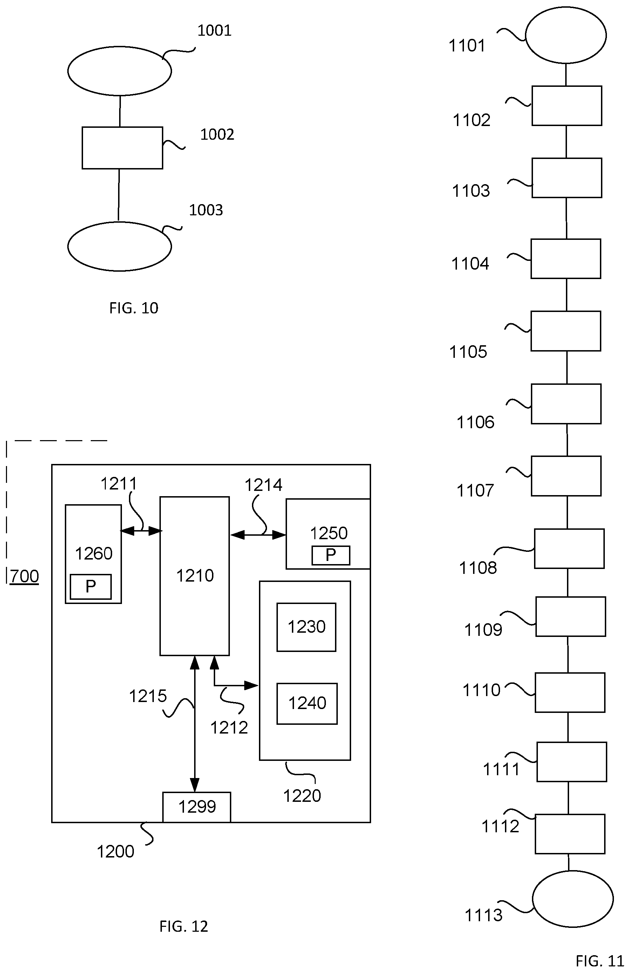

Figs. 10-11 illustrate flowcharts showing exemplary methods of forming a hollow structure of an article having an hour-glass shaped hollow interior. Fig. 10

Fig 10 illustrates a flow chart of a method of forming forming a hollow structure of an aerial article according to one example. The method starts in a Step 1001. In Step 1002 there is provided a method of forming an hour-glass shaped hollow structure of an article by means of a mould tool assembly. The mould tool assembly extends along an imaginary axis and may comprise a first and second rigid forming tool configured to be releasable coupled to each other via a joint coupling. The first rigid forming tool exhibits a first rigid forming surface and the second rigid forming tool exhibits a second rigid forming surface. The first rigid forming tool exhibits an increasing cross sectional area seen in a direction from the joint coupling toward a first free end of the first rigid forming tool body.

Alternatively, the second rigid forming tool exhibits an increasing cross sectional area seen in a direction from the joint coupling toward a second free end of the second rigid forming tool body.

In Step 1003 the method is stopped.

The step 1002 may comprise the steps of; providing the first and second rigid forming tool body; coupling the first and second rigid forming tool body to each other via the joint coupling; applying a resin matrix material on the first and second rigid forming surface and forming the resin matrix material over the first and second rigid forming surface; curing the resin matrix material; uncoupling the joint coupling; and separating the first rigid forming tool body from the second rigid forming tool body.

Fig 11 illustrates a flow chart of an exemplary method of forming a hollow structure of an aerial article, which hollow structure is to be formed by a mould tool assembly extending along an imaginary axis. The mould tool assembly comprises a first and second rigid forming tool body configured to be releasable coupled to each other via a joint coupling. The first rigid forming tool body exhibits an increasing cross sectional area seen in a direction from the joint coupling toward a first free end of the first rigid forming tool body. The first rigid forming tool body exhibits a first rigid forming surface and the second rigid forming tool body exhibits a second rigid forming surface. The method starts in Step 1101. Step 1102 provides the first and second rigid forming tool body. Step 1103 provides coupling the first and second rigid forming tool body to each other via the joint coupling. Step 1104 provides locking the joint coupling by actuating a control member associated with a locking device of the joint coupling. Step 1105 provides positioning the mould tool assembly in an outer line mould tool body providing a gap between the outer line mould tool body and the mould tool assembly. Step 1106 provides applying a resin matrix material on the first and second rigid forming surface by resin transfer into the gap. Step 1107 provides the resin transfer into the gap via at least one resin transfer channel arranged in the joint coupling. Step 1108 provides forming the resin matrix material over the first and second rigid forming surface. Step 1109 provides curing the resin matrix material. Step 1110 provides uncoupling the joint coupling. Step 1111 provides separating the first rigid forming tool body from the second rigid forming tool body. Step 1112 provides removal of the first and the second rigid forming tool body from the hollow interior of the aerial article along the imaginary axis. In Step 1113 the method is stopped.

The flow charts in Fig. 10 and/or 11 may be applied to the production line described in Fig. 7.

Fig. 12 illustrates a computer 1200 configured to control the method according to an example. The processor circuitry 700 of the production line described in Fig. 7 may comprise the computer 1200. The computer 1200 comprises a non-volatile memory NVM 1220, which is a computer memory that can retain stored information even when the computer 1200 is not powered. The computer 1200 further comprises a processing unit 1210 and a read/write memory 1250. The NVM 1220 comprises a first memory unit 1230. A computer program (which can be of any type suitable for any operational database) is stored in the first memory unit 1230 for controlling the functionality of the computer 1200.

Furthermore, the computer 1200 comprises a bus controller (not shown), a serial communication port (not shown) providing a physical interface, through which information transfers separately in two directions. The computer 1200 also comprises any suitable type of I/O module (not shown) providing input/output signal transfer, an A/D converter (not shown) for converting continuously varying signals from detectors (not shown) of e.g. the production line and other monitoring units (not shown) into binary code suitable for the computer 1200.

The computer 1200 also comprises an input/output unit (not shown) for adaption to time and date. The computer 1200 also comprises an event counter (not shown) for counting the number of event multiples that occur from independent events in the production line. Furthermore, the computer 1200 includes interrupt units (not shown) associated with the computer for providing a multi-tasking performance and real time computing in e.g. the production line. The NVM 1220 also includes a second memory unit 1240 for external controlled operation.

A data medium storing program P comprising driver routines adapted for robot actuators (not shown) and provided for operating the computer 1200 for performing any exemplary method described herein. The data medium storing program P comprises routines for causing (e.g. in the production line configured to an automatic or semi-automatic manufacture of the aerial article) a plurality of robot actuators to produce the aerial article. The data medium storing program P comprises a program code stored on a medium, which is readable on the computer 1200, for causing the computer 1200 to perform a method of forming a hollow structure of an aerial article, which hollow structure is to be formed by a mould tool assembly extending along an imaginary axis, the mould tool assembly comprises a first and second rigid forming tool body configured to be releasable coupled to each other via a joint coupling; the first rigid forming tool body exhibits an increasing cross sectional area seen in a direction from the joint coupling toward a first free end of the first rigid forming tool body; the first rigid forming tool body exhibits a first rigid forming surface and the second rigid forming tool body exhibits a second rigid forming surface; wherein the method comprises the steps of; providing the first and second rigid forming tool body; coupling the first and second rigid forming tool body to each other via the joint coupling; applying a resin matrix material on the first and second rigid forming surface and forming the resin matrix material over the first and second rigid forming surface; curing the resin matrix material; uncoupling the joint coupling; and separating the first rigid forming tool body from the second rigid forming tool body.

The data medium storing program P further may be stored in a separate memory 1260 and/or in a read/write memory 1250. The data medium storing program P is in this embodiment stored in executable or compressed data format.

It is to be understood that when the processing unit 1210 is described to execute a specific function that involves that the processing unit 1210 executes a certain part of the program stored in the separate memory 1260 or a certain part of the program stored in the read/write memory 1250.

The processing unit 1210 is associated with a data port 1299 for communication via a first data bus 1215. The non-volatile memory NVM 1220 is adapted for communication with the processing unit 1210 via a second data bus 1212. The separate memory 1260 is adapted for communication with the processing unit 1210 via a third data bus 1211. The read/write memory 1250 is adapted to communicate with the processing unit 1210 via a fourth data bus 1214. The data port 1299 may be connectable to data links of e.g. the production line shown in Fig. 7.

When data is received by the data port 1299, the data will be stored temporary in the second memory unit 1240. After that the received data is temporary stored, the processing unit 1210 will be ready to execute the program code, in accordance with the above-mentioned procedure. Preferably, the signals (received by the data port 1299) comprise information about operational status of e.g. the production line shown in Fig. 7, such as operational status regarding e.g. the positions of end effectors of the robot actuators (not shown) of the moulding tool apparatus and actual status of the mould tool assembly.

According to one aspect, signals received by the data port 1299 may contain information about actual positions the first and second rigid forming tool by means of sensors.

The received signals at the data port 1299 can be used by the computer 1200 for controlling and monitoring a semi-automatic or automatic production line in a cost-effective way. The signals received by the data port 1299 can be used for automatically moving the mould tool assembly in the production line or stationary operation by the robot apparatuses. The information may be measured by means of suitable sensors arranged at each robot apparatus of the production line. The information may also be manually fed to the processor circuitry 900 via a suitable communication device, such as a personal computer display.

Separate sequences of the method can also be executed by the computer 1200 and the processor circuitry 900, which processor circuitry 900 runs the data medium storing program P being stored in the separate memory 1260 or the read/write memory 1250. When the computer 1200 runs the data medium storing program P, suitable method steps disclosed herein will be executed. A data medium storing program product comprising a program code stored on a medium is provided, which product is readable on a suitable computer, for performing the exemplary method steps herein, when the data medium storing program P is run on the computer 1200.

The present invention is of course not in any way restricted to the preferred examples described above, but many possibilities to modifications, or combinations of the described examples, thereof should be apparent to a person with ordinary skill in the art without departing from the basic idea of the invention as defined in the appended claims.

The interior surface of the hollow aerial control surface may exhibit a geometry having complex local variations, deviating from the general shape of the hour-glass shaped hollow feature, such as trapped geometrical features of the hour-glass shaped hollow feature.

The expression "resin matrix" may be changed to "resin".

The aerial control surface may be made of matrix composite with and/or without reinforcement members, such as micro fibres and/or nano fibres.

The aerial control surface may be made of ABS, acetal, polypropylene or other plastic material or ceramics or combinations thereof or other materials.

The imaginary axis may extend in a direction corresponding with the prolongation of the aerial article or mould tool assembly or rigid forming tools and/or oriented co-axial therewith.

The step of providing the rigid forming tools and/or outer line mould tool may be performed by casting and/or machining or other manufacture method.

The material of the rigid forming tools and/or outer line mould tool may be steel, composite, etc. The resin matrix material may be epoxy with or without, or partially without micro fibres, such as carbon fibres, glass fibres or other reinforcement material.

The resin matrix material may be epoxy comprising nano-sized fibres, which may be carbon nano tubes, nano wires, graphene or other reinforcement material.

## Claims

1. A method of forming a hollow structure of an aerial control surface , which hollow structure is to be formed by a mould tool assembly (13) extending along an imaginary axis (X), the hollow structure having an hour-glass shaped interior;
- the mould tool assembly (13) comprises a first and second rigid forming tool body (15, 17) configured to be releasable coupled to each other via a joint coupling (19);
- the first rigid forming tool body (15) exhibits an increasing cross-sectional area seen in a direction from the joint coupling (19) toward a first free end (33) of the first rigid forming tool body (15);
- the first rigid forming tool body (15) exhibits a first rigid forming surface (29) and the second rigid forming tool body (17) exhibits a second rigid forming surface (31); **characterized in that** the first rigid forming surface (29) and the second rigid forming surface (31) being configured for forming an interior surface of the hollow structure of the aerial control surface;
**and the method comprises the steps of:**
- providing the first and second rigid forming tool body (15, 17);
- coupling the first and second rigid forming tool body (15, 17) to each other via the joint coupling (19);
- applying a resin matrix material on the first and second rigid forming surface (29, 31) and forming the resin matrix material over the first and second rigid forming surface (29, 31);
- curing the resin matrix material;
- uncoupling the joint coupling (19); and
- separating the first rigid forming tool body (15) from the second rigid forming tool body (17).

2. The method according to claim 1, **wherein** the aerial article is a flaperon configured to be hingedly arranged adjacent the trailing edge of a wing of an aircraft and positioned between an outboard flap and an inboard flap of the aircraft.

3. The method according to claim 1 or 2, **wherein;**
- the step of coupling the first and second rigid forming tool body (15, 17) to each other is followed by a step of locking the joint coupling (19) by actuating a locking device (42, 85) of the joint coupling (19).

4. The method according to any of claims 1 to 3, **wherein;**
- the step of coupling the first and second rigid forming tool body (15, 17) to each other is followed by a step of positioning the mould tool assembly (13) in an outer line mould tool body (37) providing a gap (39) between the outer line mould tool body (37) and the mould tool assembly (13).

5. The method according to claim 4, **wherein;**
- the step of applying a resin matrix material on the first and second rigid forming surface (29, 31) is performed by resin transfer into the gap (39).

6. The method according to claim 4 or 5, **wherein;**
- the resin transfer into the gap (39) is made via at least one resin transfer channel (92) arranged in the joint coupling (19).

7. The method according to any of the preceding claims, **wherein** the method further comprises;
- a step of removing the first and second rigid forming tool body (15, 17) from the hollow structure after the step of separating the first rigid forming tool body (15) from the second rigid forming tool body (17).

8. A mould tool assembly (13) configured to form a hollow structure of an aerial control surface , the mould tool assembly (13) extending along an imaginary axis (X) and comprises;
- a first and second rigid forming tool body (15, 17) configured to be releasable coupled to each other via a joint coupling (19);
- the first rigid forming tool body (15) exhibits a first rigid forming surface (29) and the second rigid forming tool body (17) exhibits a second rigid forming surface (31); **characterized in that**
- the first rigid forming surface (29) and the second rigid forming surface (31) being configured for forming an interior surface of the hollow structure of the aerial control surface ; the hollow structure having an hour-glass shaped interior; and
- the first rigid forming tool body (15) exhibits an increasing cross-sectional area seen in a direction from the joint coupling (19) toward a first free end (33) of the first rigid forming tool body (15).

9. The mould tool assembly (13) according to claim 8, **wherein** the joint coupling (19) comprises a first coupling surface (23) of the first rigid forming tool body (15) and a second coupling surface (27) of the second rigid forming tool body (17).

10. The mould tool assembly (13) according to claim 8 or 9, **wherein** the joint coupling (19) comprises a locking device (42, 85) configured to lock the joint coupling (19).

11. The mould tool assembly (13) according to any of claims 8 - 10claims 7-9, **wherein** the respective first and second rigid forming tool body (15, 17) each comprises a through bore extending along the imaginary axis (X), which through bore is configured to encompass an elongated guidance core (89, 91) for guiding the first and second rigid forming tool body (15, 17) in alignment with each other.

12. A moulding tool apparatus (60) configured to form an aerial control surface comprising an hour-glass shaped hollow structure extending along a central line (CL), the moulding tool apparatus (60) **comprises;**
- the mould tool assembly (13) according to any of claims 8 to 11; and
- an outer line mould tool body (37) configured to form an outer surface of the aerial article (2).

13. A production line (71) configured for automatic or semi-automatic manufacture of an aerial control surface (2) having an hour-glass shaped hollow structure, the production line (71) comprises the moulding tool apparatus (60) according to claim 12, **wherein** the production line (71) is configured to manage the method steps according to any of the claims 1 to 7.

14. The production line (71) according to claim 13, wherein the production line (71) comprises an electronic control circuit (700) coupled to the moulding tool apparatus (60), the electronic control circuit (700) is configured to control the moulding tool apparatus (60) to perform the steps according to any of claims 1 to 7.

15. A data medium storing program (P) configured for manufacture of, in a production line (71) according to claim 13 or 14, an aerial control surface comprising a hollow structure, wherein said data medium storing program (P) comprises a program code stored on a medium, which is readable on a computer (1200), for causing the electronic control circuit (700) to perform the method steps of:
- providing the first and second rigid forming tool body (15, 17);
- coupling the first and second rigid forming tool body (15, 17) to each other via the joint coupling (19);
- applying a resin matrix material on the first and second rigid forming surface (29, 31) and forming the resin matrix material over the first and second rigid forming surface (29, 31);
- curing the resin matrix material;
- uncoupling the joint coupling (19); and
- separating the first rigid forming tool body (15) from the second rigid forming tool body (17).

16. A data medium storing program product comprising a program code stored on a medium, which is readable on a computer (1200), for performing the method steps according to any of claims 1 to 7, when a data medium storing program (P) according to claim 15 is run on the computer (1200).

## Patentansprüche

1. Verfahren zum Herstellen einer Hohlstruktur einer Luftfahrzeug-Steuerfläche, wobei die Hohlstruktur mittels einer Werkzeugbaugruppe (13) zu bilden ist, die entlang einer gedachten Achse (X) verläuft, wobei die Hohlstruktur ein sanduhrförmiges Inneres aufweist;
- die Werkzeugbaugruppe (13) einen ersten und zweiten starren Formwerkzeugkörper (15, 17) umfasst, die so ausgelegt sind, dass sie über eine Verbindungskupplung (19) lösbar miteinander zu verbinden sind;
- der erste starre Formwerkzeugkörper (15) eine zunehmende Querschnittsfläche in Richtung von der Verbindungskupplung (19) zu einem ersten freien Ende (33) des ersten starren Formwerkzeugkörpers (15) aufweist;
- der erste starre Formwerkzeugkörper (15) eine erste starre Formfläche (29) aufweist und der zweite starre Formwerkzeugkörper (17) eine zweite starre Formfläche (31) aufweist; **dadurch gekennzeichnet, dass** die erste starre Formfläche (29) und die zweite starre Formfläche (31) zur Formung einer Innenfläche der Hohlstruktur der Luftfahrzeug-Steuerfläche ausgelegt sind;
**und das Verfahren die folgenden Schritte umfasst:**
- Bereitstellen des ersten und zweiten starren Formwerkzeugkörpers (15, 17);
- Verbinden des ersten und zweiten starren Formwerkzeugkörpers (15, 17) über die Verbindungskupplung (19) miteinander;
- Aufbringen eines Harzmatrixmaterials auf die erste und zweite starre Formfläche (29, 31) und Formen des Harzmatrixmaterials über die erste und zweite starre Formfläche (29, 31);
- Aushärten des Harzmatrixmaterials;
- Lösen der Verbindungskupplung (19); und
- Trennen des ersten starren Formwerkzeugkörpers (15) vom zweiten starren Formwerkzeugkörper (17).

2. Verfahren nach Anspruch 1, **wobei** das Luftfahrzeugerzeugnis ein Flaperon ist, das so ausgelegt ist, dass es schwenkbar benachbart der Hinterkante eines Flügels eines Flugzeugs angelenkt ist und zwischen einem außenliegenden und einem innenliegenden Klappenbereich des Flugzeugs positioniert ist.

3. Verfahren nach Anspruch 1 oder 2, **wobei;**
- auf den Schritt des Verbindens der ersten und zweiten starren Formwerkzeugkörper (15, 17) miteinander ein Schritt des Verriegelns der Verbindungskupplung (19) durch Betätigung einer Verriegelungsvorrichtung (42, 85) der Verbindungskupplung (19) folgt.

4. Verfahren nach einem der Ansprüche 1 bis 3, **wobei;**
- auf den Schritt des Verbindens der ersten und zweiten starren Formwerkzeugkörper (15, 17) miteinander ein Schritt des Positionierens der Werkzeugbaugruppe (13) in einem Außenlinien-Formwerkzeugkörper (37) folgt, sodass ein Spalt (39) zwischen dem Außenlinien-Formwerkzeugkörper (37) und der Werkzeugbaugruppe (13) bereitgestellt wird.

5. Verfahren nach Anspruch 4, **wobei;**
- der Schritt des Aufbringens eines Harzmatrixmaterials auf die erste und zweite starre Formfläche (29, 31) durch Harztransfer in den Spalt (39) durchgeführt wird.

6. Verfahren nach Anspruch 4 oder 5, **wobei;**
- der Harztransfer in den Spalt (39) über mindestens einen Harztransferschacht (92) erfolgt, der in der Verbindungskupplung (19) angeordnet ist.

7. Verfahren nach einem der vorangehenden Ansprüche, **wobei** das Verfahren ferner umfasst;
- einen Schritt des Entfernens der ersten und zweiten starren Formwerkzeugkörper (15, 17) aus der Hohlstruktur nach dem Schritt des Trennens des ersten starren Formwerkzeugkörpers (15) vom zweiten starren Formwerkzeugkörper (17).

8. Werkzeugbaugruppe (13), die zur Herstellung einer Hohlstruktur einer Luftfahrzeug-Steuerfläche ausgelegt ist, wobei die Werkzeugbaugruppe (13) entlang einer gedachten Achse (X) verläuft und umfasst;
- einen ersten und zweiten starren Formwerkzeugkörper (15, 17), die so ausgelegt sind, dass sie über eine Verbindungskupplung (19) lösbar miteinander verbunden werden;
- der erste starre Formwerkzeugkörper (15) eine erste starre Formfläche (29) aufweist und der zweite starre Formwerkzeugkörper (17) eine zweite starre Formfläche (31) aufweist; **dadurch gekennzeichnet, dass**
die erste starre Formfläche (29) und die zweite starre Formfläche (31) zur Formung einer Innenfläche der Hohlstruktur der Luftfahrzeug-Steuerfläche ausgelegt sind; wobei die Hohlstruktur ein sanduhrförmiges Inneres aufweist; und
- der erste starre Formwerkzeugkörper (15) eine zunehmende Querschnittsfläche in Richtung von der Verbindungskupplung (19) zu einem ersten freien Ende (33) des ersten starren Formwerkzeugkörpers (15) aufweist.

9. Werkzeugbaugruppe (13) nach Anspruch 8, **wobei** die Verbindungskupplung (19) eine erste Kupplungsfläche (23) des ersten starren Formwerkzeugkörpers (15) und eine zweite Kupplungsfläche (27) des zweiten starren Formwerkzeugkörpers (17) umfasst.

10. Werkzeugbaugruppe (13) nach Anspruch 8 oder 9, **wobei** die Verbindungskupplung (19) eine Verriegelungsvorrichtung (42, 85) umfasst, die dazu ausgelegt ist, die Verbindungskupplung (19) zu verriegeln.

11. Werkzeugbaugruppe (13) nach einem der Ansprüche 8 bis 10, Ansprüche 7 bis 9, **wobei** die jeweiligen ersten und zweiten starren Formwerkzeugkörper (15, 17) jeweils eine Durchgangsbohrung längs der gedachten Achse (X) umfassen, die dazu ausgelegt ist, einen länglichen Führungsstab (89, 91) aufzunehmen, um den ersten und zweiten starren Formwerkzeugkörper (15, 17) in Ausrichtung miteinander zu führen.

12. Formwerkzeugeinrichtung (60), die zur Herstellung einer Luftfahrzeug-Steuerfläche ausgelegt ist, die eine sanduhrförmige Hohlstruktur längs einer Mittellinie (CL) umfasst, wobei die Formwerkzeugeinrichtung (60) **umfasst;**
- die Werkzeugbaugruppe (13) nach einem der Ansprüche 8 bis 11; und
- einen Außenlinien-Formwerkzeugkörper (37), der zur Formung einer Außenfläche des Luftfahrzeugerzeugnisses (2) ausgelegt ist.

13. Fertigungslinie (71), die zur automatischen oder halbautomatischen Herstellung einer Luftfahrzeug-Steuerfläche (2) mit sanduhrförmiger Hohlstruktur ausgelegt ist, wobei die Fertigungslinie (71) die Formwerkzeugeinrichtung (60) nach Anspruch 12 umfasst, **wobei** die Fertigungslinie (71) dazu ausgelegt ist, die Verfahrensschritte nach einem der Ansprüche 1 bis 7 zu verwalten.

14. Fertigungslinie (71) nach Anspruch 13, wobei die Fertigungslinie (71) eine elektronische Steuerschaltung (700) umfasst, die mit der Formwerkzeugeinrichtung (60) gekoppelt ist, wobei die elektronische Steuerschaltung (700) dazu ausgelegt ist, die Formwerkzeugeinrichtung (60) zur Durchführung der Schritte nach einem der Ansprüche 1 bis 7 zu steuern.

15. Datenmedium, auf dem ein Programm (P) gespeichert ist, das zur Herstellung einer Luftfahrzeug-Steuerfläche mit Hohlstruktur in einer Fertigungslinie (71) nach Anspruch 13 oder 14 ausgelegt ist, wobei das Datenmedium, auf dem das Programm (P) gespeichert ist, einen Programmcode umfasst, der auf einem Medium gespeichert ist, das auf einem Computer (1200) lesbar ist, um die elektronische Steuerschaltung (700) zur Durchführung der Verfahrensschritte zu veranlassen:
- Bereitstellen des ersten und zweiten starren Formwerkzeugkörpers (15, 17);
- Verbinden des ersten und zweiten starren Formwerkzeugkörpers (15, 17) über die Verbindungskupplung (19) miteinander;
- Aufbringen eines Harzmatrixmaterials auf die erste und zweite starre Formfläche (29, 31) und Formen des Harzmatrixmaterials über die erste und zweite starre Formfläche (29, 31);
- Aushärten des Harzmatrixmaterials;
- Lösen der Verbindungskupplung (19); und
- Trennen des ersten starren Formwerkzeugkörpers (15) vom zweiten starren Formwerkzeugkörper (17).

16. Datenmedium, auf dem ein Programmprodukt gespeichert ist, das einen Programmcode umfasst, der auf einem Medium gespeichert ist, das auf einem Computer (1200) lesbar ist, um die Schritte nach einem der Ansprüche 1 bis 7 auszuführen, wenn ein Datenmedium, auf dem das Programm (P) gespeichert ist, nach Anspruch 15 auf dem Computer (1200) ausgeführt wird.

## Revendications

1. Procédé de formation d'une structure creuse d'une surface de commande aérienne, laquelle structure creuse doit être formée par un ensemble d'outil de moule (13) s'étendant le long d'un axe imaginaire (X), la structure creuse ayant un intérieur en forme de sablier ;
- l'ensemble d'outil de moule (13) comprend un premier et un second corps d'outil de formation rigides (15, 17) configurés pour être couplés de manière amovible l'un à l'autre par l'intermédiaire d'un couplage de joint (19) ;
- le premier corps d'outil de formation rigide (15) présente une surface de section transversale croissante vue dans une direction provenant du couplage de joint (19) vers une première extrémité libre (33) du premier corps d'outil de formation rigide (15) ;
- le premier corps d'outil de formation rigide (15) présente une première surface de formation rigide (29) et le second corps d'outil de formation rigide (17) présente une seconde surface de formation rigide (31) ; **caractérisé en ce que** la première surface de formation rigide (29) et la seconde surface de formation rigide (31) sont configurées pour former une surface intérieure de la structure creuse de la surface de commande aérienne ;
**et le procédé comprend les étapes consistant** à :
- fournir le premier et le second corps d'outil de formation rigides (15, 17) ;
- coupler le premier et le second corps d'outil de formation rigides (15, 17) l'un à l'autre par l'intermédiaire du couplage de joint (19) ;
- appliquer un matériau de matrice de résine sur la première et la seconde surface de formation rigide (29, 31) et former le matériau de matrice de résine sur la première et la seconde surface de formation rigide (29, 31) ;
- durcir le matériau de matrice de résine ;
- découpler le couplage de joint (19) ; et
- séparer le premier corps d'outil de formation rigide (15) du second corps d'outil de formation rigide (17).

2. Procédé selon la revendication 1, **dans lequel** l'article aérien est un flaperon configuré pour être agencé de manière articulée de façon adjacente au bord de fuite d'une aile d'un aéronef et positionné entre un volet extérieur et un volet intérieur de l'aéronef.

3. Procédé selon la revendication 1 ou 2, **dans** lequel ;
- l'étape de couplage du premier et du second corps d'outil de formation rigides (15, 17) l'un à l'autre est suivie d'une étape de verrouillage du couplage de joint (19) par l'actionnement d'un dispositif de verrouillage (42, 85) du couplage de joint (19).

4. Procédé selon l'une quelconque des revendications 1 à 3, **dans lequel** ;
- l'étape de couplage du premier et du second corps d'outil de formation rigides (15, 17) l'un à l'autre est suivie d'une étape de positionnement de l'ensemble d'outil de moule (13) dans un corps d'outil de moule de ligne extérieure (37) ménageant un espace (39) entre le corps d'outil de moule de ligne extérieure (37) et l'ensemble d'outil de moule (13).

5. Procédé selon la revendication 4, **dans lequel** ;
- l'étape d'application d'un matériau de matrice de résine sur la première et la seconde surface de formation rigide (29, 31) est réalisée par transfert de résine dans l'espace (39).

6. Procédé selon la revendication 4 ou 5, **dans lequel** ;
- le transfert de résine dans l'espace (39) est effectué via au moins un canal de transfert de résine (92) agencé dans le couplage de joint (19).

7. Procédé selon l'une quelconque des revendications précédentes, **dans lequel** le procédé comprend en outre ;
- une étape de retrait du premier et du second corps d'outil de formation rigides (15, 17) de la structure creuse après l'étape de séparation du premier corps d'outil de formation rigide (15) du second corps d'outil de formation rigide (17).

8. Ensemble d'outil de moule (13) configuré pour former une structure creuse d'une surface de commande aérienne, l'ensemble d'outil de moule (13) s'étendant le long d'un axe imaginaire (X) et comprend ;
- un premier et un second corps d'outil de formation rigides (15, 17) configurés pour être couplés de manière amovible l'un à l'autre par l'intermédiaire d'un couplage de joint (19) ;
- le premier corps d'outil de formation rigide (15) présente une première surface de formation rigide (29) et le second corps d'outil de formation rigide (17) présente une seconde surface de formation rigide (31) ; **caractérisé en ce que**
- la première surface de formation rigide (29) et la seconde surface de formation rigide (31) étant configurées pour former une surface intérieure de la structure creuse de la surface de commande aérienne ; la structure creuse ayant un intérieur en forme de sablier ; et
- le premier corps d'outil de formation rigide (15) présente une surface de section transversale croissante vue dans une direction provenant du couplage de joint (19) vers une première extrémité libre (33) du premier corps d'outil de formation rigide (15).

9. Ensemble d'outil de moule (13) selon la revendication 8, **dans lequel** le couplage de joint (19) comprend une première surface de couplage (23) du premier corps d'outil de formation rigide (15) et une seconde surface de couplage (27) du second corps d'outil de formation rigide (17).

10. Ensemble d'outil de moule (13) selon la revendication 8 ou 9, **dans lequel** le couplage de joint (19) comprend un dispositif de verrouillage (42, 85) configuré pour verrouiller le couplage de joint (19).

11. Ensemble d'outil de moule (13) selon l'une quelconque des revendications 8 à 10, **dans lequel** les premier et second corps d'outil de formation rigides (15, 17) respectifs comprennent chacun un alésage traversant s'étendant le long de l'axe imaginaire (X), lequel alésage traversant est configuré pour englober un noyau de guidage allongé (89, 91) pour guider le premier et le second corps d'outil de formation rigides (15, 17) en alignement l'un avec l'autre.

12. Appareil d'outil de moulage (60) configuré pour former une surface de commande aérienne comprenant une structure creuse en forme de sablier s'étendant le long d'une ligne centrale (CL), l'appareil d'outil de moulage (60) **comprend** ;
- l'ensemble d'outil de moule (13) selon l'une quelconque des revendications 8 à 11 ; et
- un corps d'outil de moule de ligne extérieure (37) configuré pour former une surface extérieure de l'article aérien (2).

13. Ligne de production (71) configurée pour la fabrication automatique ou semi-automatique d'une surface de commande aérienne (2) ayant une structure creuse en forme de sablier, la ligne de production (71) comprend l'appareil d'outil de moulage (60) selon la revendication 12, **dans laquelle** la ligne de production (71) est configurée pour gérer les étapes de procédé selon l'une quelconque des revendications 1 à 7.

14. Ligne de production (71) selon la revendication 13, dans laquelle la ligne de production (71) comprend un circuit de commande électronique (700) couplé à l'appareil d'outil de moulage (60), le circuit de commande électronique (700) étant configuré pour commander l'appareil d'outil de moulage (60) afin de réaliser les étapes selon l'une quelconque des revendications 1 à 7.

15. Programme de stockage sur support de données (P) configuré pour la fabrication, dans une ligne de production (71) selon la revendication 13 ou 14, d'une surface de commande aérienne comprenant une structure creuse, dans lequel ledit programme de stockage sur support de données (P) comprend un code de programme stocké sur un support, qui est lisible sur un ordinateur (1200), pour amener le circuit de commande électronique (700) à réaliser les étapes de procédé consistant à :
- fournir le premier et le second corps d'outil de formation rigides (15, 17) ;
- coupler le premier et le second corps d'outil de formation rigides (15, 17) l'un à l'autre par l'intermédiaire du couplage de joint (19) ;
- appliquer un matériau de matrice de résine sur la première et la seconde surface de formation rigide (29, 31) et former le matériau de matrice de résine sur la première et la seconde surface de formation rigide (29, 31) ;
- durcir le matériau de matrice de résine ;
- découpler le couplage de joint (19) ; et
- séparer le premier corps d'outil de formation rigide (15) du second corps d'outil de formation rigide (17).

16. Produit de programme de stockage sur support de données comprenant un code de programme stocké sur un support, qui est lisible sur un ordinateur (1200), pour réaliser les étapes de procédé selon l'une quelconque des revendications 1 à 7, lorsque le programme de stockage sur support de données (P) selon la revendication 15 est exécuté sur l'ordinateur (1200).
